# EUROPEAN PATENT SPECIFICATION

(11) **EP 0 908 094 B1**
(45) Date of publication and mention of the grant of the patent: **11.04.2001**
(21) Application number: 97203100.9
(22) Date of filing: 07.10.1997
(51) Int. Cl.: A01K 73/02, A01K 80/00, A01K 75/00, A01K 79/02

(54) **Fishing device**
Fischvorrichtung
Dispositif de pêche

(43) Date of publication of application: 14.04.1999
(73) Proprietor: J. Hoogenraad Marine Engineering, 2586 SJ The Hague (NL)
(72) Inventor: Hoogenraad, Johannes, 2586 SJ The Hague (NL)
(74) Representative: de Bruijn, Leendert C.

(56) References cited:
- EP-A- 0 691 077
- DE-A- 3 229 173
- FR-A- 2 029 951
- NL-A- 8 201 078
- NL-A- 8 403 029
- US-A- 2 413 552
- US-A- 4 646 448
- LE MEN: "Une drague électrifiée pour la recapture des crevettes d'élevage" EQUINOXE, no. 22, August 1988, NANTES (F), pages 8-13, XP000003392
- "New Hope for Cocklings?" WORLD FISHING, vol. 14, no. 12, December 1965, US, page 77 XP002020301

## Description

The invention relates to a fishing device, comprising a rigid frame with two or more longitudinal sides, which are each provided with a sliding member for sliding over a sliding surface, such as a seabed, a fish-startling device, which is positioned along a front side of the frame, close to the sliding surface, and a fish-collecting part, which lies along a rear side of the frame.

When fishing for flatfish, which usually bury themselves in the seabed, nets are currently used which drag along the seabed and are connected to a pivotable boom on a fishing cutter, the so-called "trawlers". With these vessels, one trawl net is moved along the seabed on each side of the boat. The known trawl net comprises a steel tube, or bar, which varies in length from 4-12 metres and from which the net is suspended. Two sliding elements on either side of the bar drag along the seabed and hold the bar at the correct height. A ground cord, to which, at the front side, the lower edge of the net is fastened, runs between the two sliding elements. In order to startle the flatfish, which have frequently buried themselves in the seabed, a plurality of chains are arranged between the sliding elements, in front of the net, which chains, on dragging along, turn over the ground. A number of drawbacks of economic and ecological nature are associated with the known fishing device. Owing to its size and mass, the known device creates a relatively high resistance during dragging along the seabed. Thus a relatively large amount of power is required in order to move the fishing cutter forwards thus moving the trawl net forwards.

Furthermore, the net dragging along the seabed causes considerable damage to the marine environment, since crustaceans are cracked, starfish are harmed or destroyed and other organisms, such as young flatfish are likewise harmed.

Furthermore, the plastic material forming the nets which drag along the seabed are susceptible to wear. The plastic worn away is left behind in the sea in a finely divided state and forms a considerable source of pollution.

World Fishing, Volume 14, No. 12, December 1965, US page 77 has disclosed a trawl net for catching shellfish, which is provided at the front with two sliding shoes. A cage-like collecting part is positioned at the rear. Air is injected into the ground in order to throw the shellfish upwards, and the latter are then transported to the collecting part using a blade. A design of this kind has the drawback that it causes considerable damage to the marine environment. Furthermore, the known device can be damaged by stones present on the seabed.

A fishing device according to the preamble of claim 1 is known from Equinoxe, No. 22, August-September 1988, Nantes, France, pages 8 to 13: Le Men: "Une drague électrifiée pour la recapture des crevettes d'élevage".

The known device for collecting shrimp comprises a fish collecting part in the form of a net, which is dragged behind the frame over the seabed. The known device is not suitable for fishing, in particular when fishing for flat fish. Furthermore, the net dragging across the seabed will cause substantial disturbance of the marine environment.

It is an object of the present invention to provide a fishing device with which the above-mentioned disadvantages are avoided. To this end, the fishing device according to the invention is characterized in that the fish collecting part is situated on the frame at a distance of at least a few centimetres above the sliding surface and is provided, along an opening which faces towards the front side of the frame, with a return member.

In the fishing device according to the invention, contact thereof with the seabed is minimized. Since the fish-collecting part is situated at a predetermined height above the seabed, starfish, crustaceans and young flatfish can pass through beneath the fishing device without obstruction or without being caught therein. Stones present on the seabed can also pass through beneath the fishing device unhindered, without the fishing device being damaged by these stones.

Furthermore, the resistance caused by the seabed and the surrounding water when the fishing device according to the invention is dragged along is considerably reduced, in particular because the water can flow freely through the device, owing to a relatively small number of m² of netting and due to the fact that the contact between the device and the seabed is limited to the sliding members. Owing to the small contact area with the seabed, wear to the device, and in particular to any nets arranged on the device, is minimal, so that pollution problems resulting from wear to nets are eliminated.

In an embodiment of the fishing device according to the invention, the fish-startling device comprises a conduit which extends between the two longitudinal sides, which conduit is connected to a number of injection members provided with outlet openings for feeding a fluid under pressure into the seabed. In this way, the fish can be efficiently startled out of the seabed with only minimal contact with the seabed. By blowing a fluid into the seabed, the fluid preferably being formed by water which is fed by a water pump positioned on the fishing cutter, the fish are efficiently startled while causing minimum interference to the environment. The injection members of the fish-startling device may be designed as a number of plates which are positioned along the line and are directed essentially parallel to the longitudinal sides, which plates extend beyond the sliding surface. While the fishing device according to the invention is being dragged along, the plates will extend a few centimetres (for example about 5 cm) into the seabed. Preferably, the outlet openings for the fluid are situated on the underside of the plates, so that air or water is blown into the seabed. Since the plates are situated at a relatively great distance apart, for example 20 cm, there is in turn minimal disruption to the seabed and, at the same time, the flatfish are startled efficiently.

It should be noted that it is known from European Patent Application EP-A-691,077 to provide a trawl net with a fish-startling device in the form of water jets which are directed onto the seabed. In this case, however, the water jets are not injected into the seabed itself, but rather chum the seabed up from above, so that there is relatively great disturbance caused to the marine environment.

In an alternative embodiment of the fishing device according to the invention, an electrical voltage may be applied to the plates. This also makes it possible to startle the fish out of the seabed and to make them swim towards the fish-collecting part of the fishing device. The plates may be fastened to a support which is fastened pivotably at both ends to the longitudinal sides of the frame. As a result, the plates can move along unevenness in the seabed and, in the event of stones and other obstacles being encountered, the plates are prevented from being distorted or broken off.

In a further embodiment, the fish-collecting part is covered along a rear side by means of a cover member which can be folded open and is provided with passage openings, such as for example a net which is fastened using tensioning cables. When the fishing device is hauled in, it is pulled aboard in its vertical position and the rear side of the fish-collecting part is opened above the deck, so that the fish can be removed from the fish-collecting part.

When the device according to the invention is dragged along the seabed, the fish startled at the front of the fishing device will swim upwards and move into the fish-collecting part situated above the seabed. In doing so, the fish move past a return member which is located along the front side of the collecting part, for example in the form of a number of flaps which can move in one direction. These flaps are opened by the stream of water which flows through the fish-collecting part when the fishing device is dragged along the seabed. Owing to the constriction formed between the return flaps, this stream of water is sufficiently strong to prevent the flatfish from being able to swim back out of the fish-collecting part, counter to this stream of water. However, roundfish are able to swim back against this stream of water, so that these fish can escape again from the collecting part via the return member. Young flatfish will swim up less far when startled out of the seabed, so that they can escape beneath the fish-collecting part. As a result, a very selective fishing yield is possible, so that only flatfish of the desired size are caught.

A fishing boat provided with a fishing device according to the invention comprises a boom which is positioned on the deck and is pivotable transversely to the deck, as is also employed when using conventional trawl nets. The fishing device according to the invention is connected by means of a tow-cable to the end of this boom. According to the invention, a hoisting device is positioned close to the boom, for example in the form of two davits, which can be tilted overboard. The hoisting device may likewise be disposed on the afterdeck. At the front of the fishing device are situated two haul-in cables, which are each connected to an arm of the separate davits. After the fishing device has been hauled in along the tow-cable, the fishing device, by hauling in the haul-in cables, can be moved to a position where its front side is parallel to the longitudinal direction of the fishing boat. Then, by raising the davits, the fishing device can be suspended from the haul-in cables in the vertical position and can be moved above the deck. Then the fish can be emptied onto the deck or into the hold by opening the fish-collecting part.

An embodiment of the fishing device according to the invention will be explained in more detail with reference to the appended drawing, in which:
Figure 1 shows a perspective view of a fishing device according to the invention,
Figures 2 shows a side view of the fishing device in accordance with Figure 1,
Figure 3 shows a diagrammatic side view of the fishing device being dragged along the seabed,
Figures 4 and 5 show a top view of a fishing boat provided with a fishing device according to the invention when the said device is being hauled in, and
Figure 6 shows a diagrammatic front view of a fishing boat provided with a hoisting device for hauling in the fishing device according to the invention.

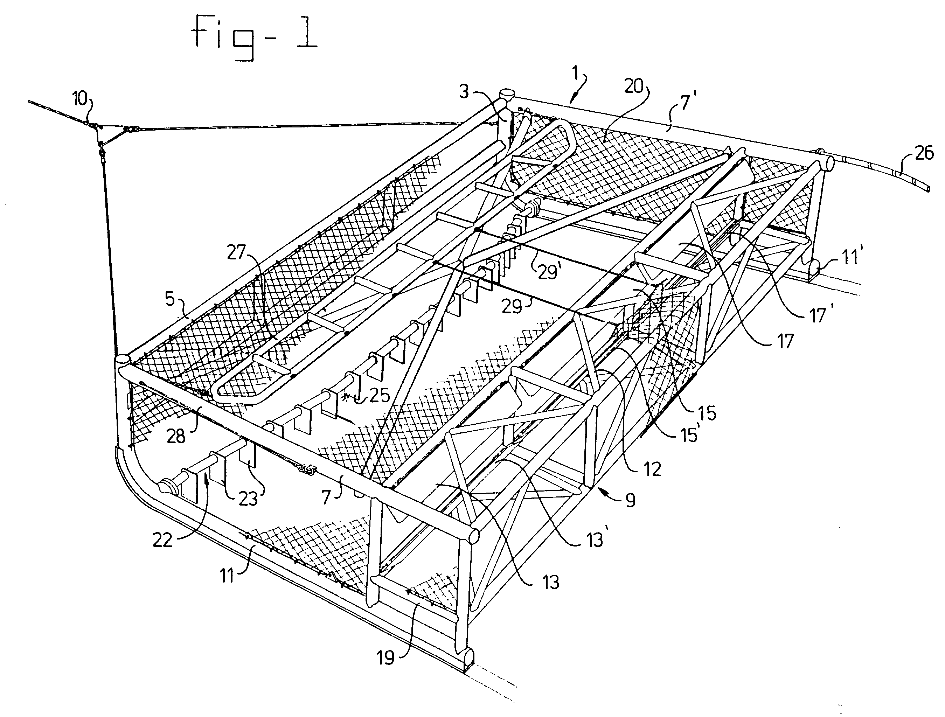

Figure 1 shows the fishing device 1 according to the present invention, which is dragged along the seabed by means of a tow-cable 10. The fishing device shown comprises a rigid frame 3, which has a length of 2.5 m and a width of between 4 m and 6 m, the frame being formed from tubes with a diameter of between 10.1 and 5.0 centimetres and a wall thickness of 2.9-4.1 mm. The front side 5 of the frame 3 comprises two transverse supports which are fastened to longitudinal sides 7, 7'. On the undersides of the longitudinal sides 7, 7' are held sliding members 11, 11', which are bent upwards towards the front side 5. As the fish-collecting part, a cage-like collecting part 9 is formed at the rear side of the frame 3, the underside 19 of which collecting part is situated at a distance of 20 centimetres above the seabed. The collecting part 9 is provided with reinforcement ribs 12. In order to provide strength, fishing devices of a larger size (8-12 m) may be equipped with one or more additional reinforcement elements which are parallel to the longitudinal sides 7, 7'. In that case, the sliding members 11, 11' may also be positioned along the support elements, instead of on the longitudinal sides 7, 7'.

An inlet opening of the collecting part 9 is provided with return flaps 13, 13', 15, 15' and 17, 17'. These flaps 13, 13' - 17, 17' are spring-loaded and in the normal position are closed. When the fishing device 1 is dragged along the seabed, the valves 13, 13' - 17, 17' are opened by the water pressure.

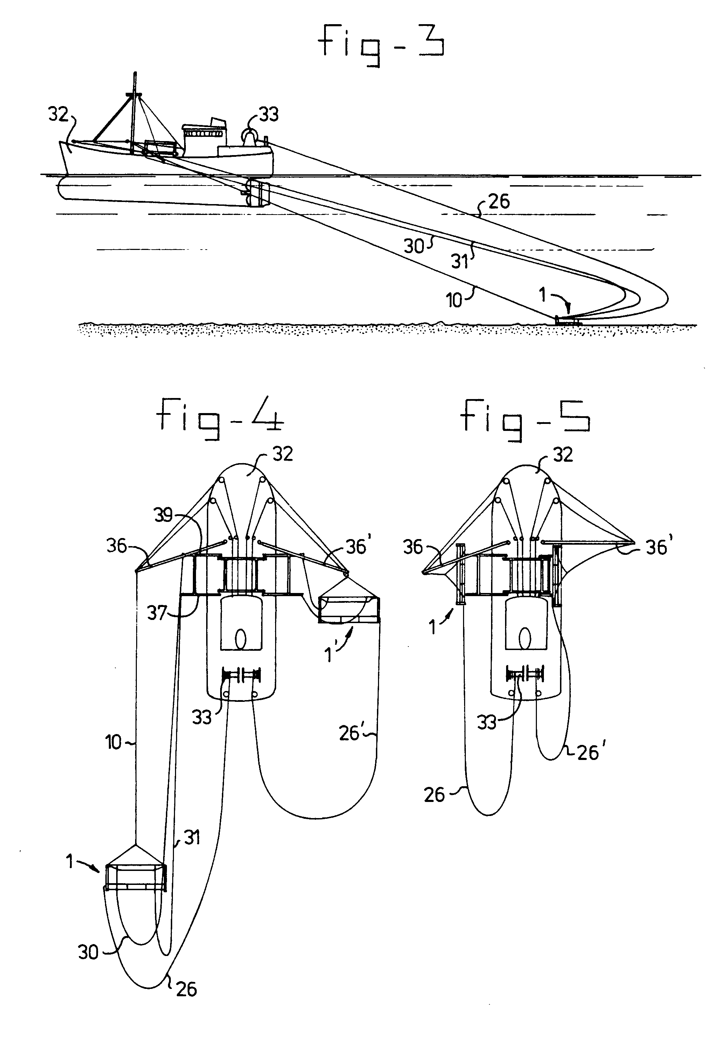

As shown in Figure 2, a movable flap 14 is preferably also positioned between the underside 19 of the collecting part 9 and the sliding surface, which flap is used to prevent startled flatfish, such as plaice, swimming through beneath the collecting part 9. The flap 14 is suspended movably and, if it comes into contact with stones or other irregularities in the ground, springs backwards. The flap 14 which is fastened to the underside 19 of the inlet opening of the collecting part 9 does not reach right to the seabed, so that young flatfish can swim through beneath it.

A tube 22, to which plates 23 are fastened, is held between the two longitudinal sides 7, 7', close to the front side 5 of the fishing device 1. The plates 23 extend about 5 cm into the seabed. Via the tube 22, which forms a conduit for seawater, seawater can be fed under pressure to exit openings 25 in the plates 23. For this purpose, the plates 23 are either of hollow design or are provided with feed ducts leading to the exit openings 25. The tube 22 is connected to a conduit 26, via which seawater is fed under pressure from a fishing boat.

Air can also be fed through the conduit 26 instead of water. Instead of a hollow tube 22, it would also be possible to use a solid pipe along which is held a separate line for feeding air or water to the exit openings 25.

In a further alternative embodiment which, however, is not preferred, the plates 23 could be omitted, and exit openings could be provided in the form of nozzles on the tube 22. Furthermore, it may be envisaged for the pump for feeding air or water to the openings 25 to be fastened directly to the frame 3, instead of on a fishing boat.

The frame 3 is partially surrounded by a net 20, so that the fish which have been startled by the plates 23 cannot escape out of the space enclosed by the frame 3. The net of the collecting part 9 is connected, via cables 29, 29, to a bridge 27. By moving the bridge 27 by releasing cable 28, the net around the collecting part is opened when its contents are to be unloaded onto the deck of a fishing boat.

When the device 1 is moved along the seabed, the flatfish are startled by means of the plates 23 and the air or water blown into the ground. They then swim upwards and enter the collecting space 9 via the return flaps 13,13'- 17,17'. Owing to the water which is accelerated in the constriction between the flaps 13, 13' - 17, 17', the fish can no longer swim back out of the collecting part.

Figure 3 diagrammatically shows how the device 1 on the tow-cable 10 is dragged along the seabed with the aid of a fishing boat. While it is being dragged along, the feed hose 26 is paid out sufficiently far to avoid being tensioned. Two haul-in cables 30, 31 are fastened to the front side of the device 1 and, while the device is being dragged along, are likewise paid out to form a relatively large loop.

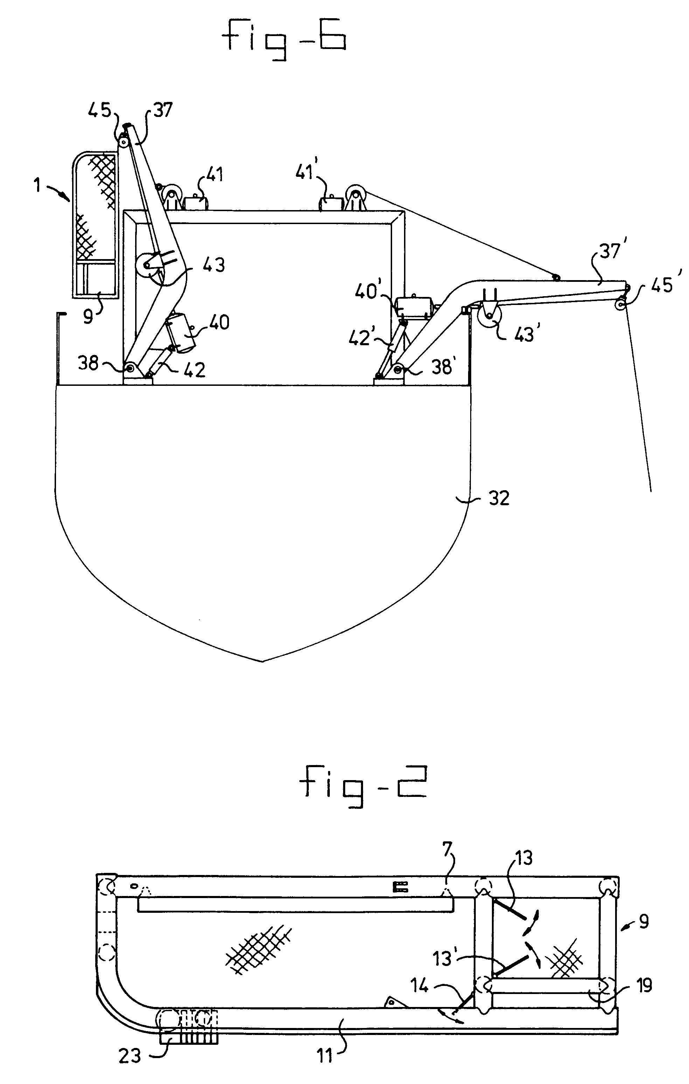

As can be seen from Figures 4 and 5, the tow-cable 10 is fastened to the end of a boom 36. When the device 1 is being dragged along, this boom is pivoted outside the boat 32. The haul-in cables 30, 31 are fastened to arms 37, 39 of a hoisting device which, in the case illustrated, is formed by two davits. When hauling in the fishing device 1, the tow-cable 10 is hauled in until the fishing device 1 is situated below the end of the boom 36. At the same time as the tow-cable 10 is hauled in, the haul-in cables 30, 31 and the hose 26 are brought in. In the process, the hose 26 is wound onto a drum 33. By bringing in the haul-in cables 30, 31, the fishing device 1 is positioned in such a manner that the front side 5 comes to lie parallel to the longitudinal direction of the boat 32, as shown on the left-hand side of the boat 32 in Figure 5. Then, by raising the arms 37, 39, the fishing device 1 is brought on board in the vertical position, as shown on the right-hand side of the boat 32 in Figure 5.

As can be seen from Figure 6, the haul-in cables 30, 31 of the device 1 are brought in by a respective electric motor 40, 40. These electric motors 40, 40' are attached to a hingeable davit 37, 37', which is fastened to the deck at a hinge point 38, 38'. By means of the electric motor 41, 41', the davit 37, 37' can be moved into a vertical position. A compression spring 42, 42' is fastened, on the one hand, to the davit 37, 37' and, on the other hand, to the deck of the boat 32, in order to press the davit 37, 37' outwards.

The electric motor 40, 40' is situated at a high level and is directly connected to the davit 37, 37', so that as little seawater as possible can come into contact therewith. This design also means that there are no wires running along the deck, thus increasing safety.

Furthermore, the electric motors 41, 41' are placed at a sufficiently high position for them not to be in the way during operation of the fishing device according to the invention.

Instead of air or water, an electric voltage can also be applied to the plates 23 of the device by means of the conduit 26. In this case, the plates 23 should be designed such that they are insulated from one another.

Furthermore, it is also possible to use the line 26 in order to add fertilizers to the water which is used to startle the fish. As a result, the seabed can be simultaneously fertilized during fishing, the fertilizers being injected into the seabed.

## Claims

1. Fishing device (1), comprising a rigid frame (3) with two or more longitudinal sides (7, 7'), which are each provided with a sliding member (11, 11') for sliding over a sliding surface, such as a seabed, a fish-startling device (22, 23, 25, 26), which is positioned along a front side (5) of the frame, close to the sliding surface, and a fish-collecting part (9), which lies along a rear side of the frame, characterised in that the fish collecting part (9) is situated on the frame (3) at a distance of at least a few centimetres above the sliding surface and is provided, along an opening which faces towards the front side of the frame, with a return member (13, 13', 15, 15', 17, 17').

2. Fishing device according to Claim 1, characterized in that the fish-startling device (22, 23, 25, 26) comprises a conduit (22) which extends between the two longitudinal sides (7, 7'), which conduit (22) is connected to a number of injection members (23) provided with outlet openings (25) for feeding a fluid under pressure into the seabed.

3. Fishing device according to Claim 2, characterized in that the fluid is formed by water and in that the conduit (22) is connected to a water pump.

4. Fishing device according to Claim 2 or 3, characterized in that a number of plates (23) are fastened along the conduit (22), essentially parallel to the longitudinal sides (7, 7'), which plates (23) extend beyond the sliding surface.

5. Fishing device (1) according to Claim 4, characterized in that the plates (23) are provided with an exit opening (25) for the fluid, which opening is connected to the conduit (22).

6. Fishing device (1) according to Claim 4 or 5, characterized in that an electrical voltage is applied to the plates (23).

7. Fishing device (1) according to Claim 4, 5 or 6, characterized in that the plates (23) are fastened to a support which is fastened pivotably at both ends to the longitudinal sides (7, 7') of the frame.

8. Fishing device (1) according to one of the preceding claims, characterized in that the fish-collecting part (9) is covered along a rear side by means of a cover member (20) which can be folded open and is provided with passage openings.

9. Fishing device (1) according to claim 8, characterized in that the cover member (20) comprises a net enclosing the frame.

10. Fishing boat (32) provided with a fishing device (1) according to one of the preceding claims, the boat being provided with a boom (36) which is positioned on the deck and is pivotable transversely to the deck, characterized in that the fishing device is connected by means of a tow-cable (10) to the end of the boom (36), a hoisting device (37, 38, 39, 40, 41, 42) being positioned, close to the boom (36), along one side of the boat and having two arms (37, 39) which are situated apart and are fastened tiltably to the deck, and two haul-in cables (30, 31) being connected, on the one hand, close to the front side (5) of the fishing device (1) and, on the other hand, to a respective arm (37, 39) of the hoisting device.

## Patentansprüche

1. Fischvorrichtung (1), umfassend einen starren Rahmen (3) mit zwei oder mehr Längsseiten (7, 7'), welche jeweils mit einem Gleitglied bzw. -element (11, 11') für ein Gleiten über eine Gleitoberfläche, beispielsweise einen See- bzw. Meeresboden, versehen sind, eine Fischaufschreck- bzw. -aufscheuchvorrichtung (22, 23, 25, 26), welche entlang einer Vorderseite (5) des Rahmens nahe der Gleitoberfläche positioniert ist, und ein Fischsammelteil (9), welches entlang einer hinteren Seite des Rahmens liegt, dadurch gekennzeichnet, daß das Fischsammelteil (9) an dem Rahmen (3) in einem Abstand von wenigstens einigen Zentimetern über der Gleitoberfläche angeordnet ist und entlang einer Öffnung, welche zur Vorderseite des Rahmens gerichtet ist, mit einem Umkehrglied bzw. -element bzw. Rückstellglied (13, 13', 15, 15', 17, 17') versehen ist.

2. Fischvorrichtung nach Anspruch 1, dadurch gekennzeichnet, daß die Fischaufschreckvorrichtung (22, 23, 25, 26) eine Leitung (22) umfaßt, welche sich zwischen den zwei Längsseiten (7, 7') erstreckt, welche Leitung (22) mit einer Anzahl von Einspritzgliedern (23) verbunden ist, welche mit Auslaßöffnungen (25) zum Zuführen eines Fluids unter Druck in den Seeboden versehen sind.

3. Fischvorrichtung nach Anspruch 2, dadurch gekennzeichnet, daß das Fluid von Wasser gebildet ist und daß die Leitung (22) mit einer Wasserpumpe verbunden ist.

4. Fischvorrichtung nach Anspruch 2 oder 3, dadurch gekennzeichnet, daß eine Anzahl von Platten (23) entlang der Leitung (22) im wesentlichen parallel zu den Längsseiten (7, 7') befestigt ist, welche Platten (23) sich über die Gleitoberfläche hinaus erstrecken.

5. Fischvorrichtung (1) nach Anspruch 4, dadurch gekennzeichnet, daß die Platten (23) mit einer Austrittsöffnung (25) für das Fluid versehen sind, welche Öffnung mit der Leitung (22) verbunden ist.

6. Fischvorrichtung (1) nach Anspruch 4 oder 5, dadurch gekennzeichnet, daß eine elektrische Spannung an die Platten (23) angelegt ist.

7. Fischvorrichtung (1) nach Anspruch 4, 5 oder 6, dadurch gekennzeichnet, daß die Platten (23) an einer Halterung festgelegt sind, welche schwenkbar an beiden Enden an den Längsseiten (7, 7') des Rahmens festgelegt ist.

8. Fischvorrichtung. (1) nach einem der vorhergehenden Ansprüche, dadurch gekennzeichnet, daß das Fischsammelteil (9) entlang einer hinteren Seite mit Hilfe eines Abdeckglieds bzw. -elements (20) abgedeckt ist, welches aufgefaltet werden kann und mit Durchtrittsöffnungen versehen ist.

9. Fischvorrichtung (1) nach Anspruch 8, dadurch gekennzeichnet, daß das Abdeckglied (20) ein den Rahmen umgebendes Netz umfaßt.

10. Fischerboot (32), welches mit einer Fischvorrichtung (1) nach einem der vorhergehenden Ansprüche versehen ist, wobei das Boot mit einem Ausleger (36) versehen ist, welcher auf dem Deck positioniert ist und quer zum Deck schwenkbar ist, dadurch gekennzeichnet, daß.die Fischvorrichtung mit Hilfe eines Schlepp- bzw. Zugkabels (10) mit dem Ende des Auslegers (36) verbunden ist, wobei eine Hebevorrichtung (37, 38, 39, 40, 41, 42) nahe dem Ausleger (36) entlang einer Seite des Boots angeordnet ist und zwei Arme (37, 39) aufweist, welche voneinander beabstandet sind und schwenkbar am Deck festgelegt sind, und wobei zwei Einholkabel (30, 31) einerseits nahe der Vorderseite (5) der Fischvorrichtung (1) und andererseits mit einem entsprechenden Arm (37, 39) der Hebevorrichtung verbunden sind.

## Revendications

1. Outil de pêche (1), comprenant un châssis rigide (3) avec deux ou plus de deux côtés longitudinaux (7, 7'), qui sont dotés chacun d'un élément de glissement (11, 11') pour glisser sur une surface de glissement, telle que le fond de la mer, un dispositif à déloger les poissons (22, 23, 25, 26), qui est positionné le long d'un côté avant (5) du châssis, près de la surface de glissement, et une partie à récupérer les poissons (9), qui se situe le long d'un côté arrière du châssis, caractérisé en ce que la partie à récupérer les poissons (9) est située sur le châssis (3) à une distance d'au moins quelques centimètres au-dessus de la surface de glissement et est dotée, le long d'une ouverture qui donne vers le côté avant du châssis, d'un élément à rebroussement (13, 13', 15, 15', 17, 17').

2. Outil de pêche selon la revendication 1, caractérisé en ce que le dispositif à déloger les poissons (22, 23, 25, 26) comprend un conduit (22) qui s'étend entre les deux côtés longitudinaux (7, 7'), lequel conduit (22) est relié à un nombre d'éléments d'injection (23) dotés d'ouvertures de décharge (25) pour distribuer un fluide sous pression dans le fond de la mer.

3. Outil de pêche selon la revendication 2, caractérisé en ce que le fluide est formé par de l'eau et en ce que le conduit (22) est relié à une pompe à eau.

4. Outil de pêche selon la revendication 2 ou 3, caractérisé en ce qu'un nombre de plaques (23) est fixé le long du conduit (22), essentiellement parallèlement aux côtés longitudinaux (7, 7'), lesquelles plaques (23) s'étendent au-delà de la surface de glissement.

5. Outil de pêche (1) selon la revendication 4, caractérisé en ce que les plaques (23) sont dotées d'une ouverture de décharge (25) pour le fluide, laquelle ouverture est reliée au conduit (22).

6. Outil de pêche (1) selon la revendication 4 ou 5, caractérisé en ce qu'une tension électrique est appliquée sur les plaques (23).

7. Outil de pêche (1) selon la revendication 4, 5 ou 6, caractérisé en ce que les plaques (23) sont fixées à un support qui est fixé de manière à pivoter aux deux extrémités aux côtés longitudinaux (7, 7') du châssis.

8. Outil de pêche (1) selon l'une quelconque des revendications précédentes, caractérisé en ce que la partie à récupérer les poissons (9) est couverte le long d'un côté arrière au moyen d'un élément de couverture (20) qui peut être ouvert par repliage et est doté d'ouvertures de passage.

9. Outil de pêche (1) selon la revendication 8, caractérisé en ce que l'élément de couverture (20) comprend un filet enfermant le châssis.

10. Bateau de pêche (32) équipé d'un outil de pêche (1) selon l'une quelconque des revendications précédentes, le bateau étant pourvu d'une flèche (36) qui est positionnée sur le pont et est adaptée à pivoter transversalement au pont, caractérisé en ce que l'outil de pêche est relié au moyen d'un câble de remorque (10) à l'extrémité de la flèche (36), un dispositif de hissage (37, 38, 39, 40, 41, 42) étant positionné, près de la flèche (36), le long d'un côté du bateau et comportant deux bras (37, 39) qui sont espacés et sont fixés de manière à pouvoir s'incliner relativement au pont, et deux câbles de halage à bord (30, 31) étant reliés, d'une part, près du côté avant (5) de l'outil de pêche (1) et, d'autre part, à un bras respectif (37, 39) du dispositif de hissage.
